(19) Europäisches Patentamt / European Patent Office / Office européen des brevets

(11) **EP 3 971 544 B1**

(12) **EUROPÄISCHE PATENTSCHRIFT**

(45) Veröffentlichungstag und Bekanntmachung des Hinweises auf die Patenterteilung:
**19.11.2025   Patentblatt 2025/47**

(21) Anmeldenummer: **21000250.7**

(22) Anmeldetag: **31.08.2021**

(51) Internationale Patentklassifikation (IPC):
**G01K 17/00** (2006.01)       **G01M 99/00** (2011.01)

(52) Gemeinsame Patentklassifikation (CPC):
**G01K 17/00; G01M 99/002**

(54) **ANORDNUNG ZUR MESSUNG VORBESTIMMTER QUALITÄTSKRITERIEN VON WÄRME EMITTIERENDEN PRÜFLINGEN**

DEVICE FOR MEASURING PREDETERMINED QUALITY CRITERIA OF HEAT EMITTING SPECIMENS

AGENCEMENT DE MESURE DES CRITÈRES DE QUALITÉ PRÉDÉTERMINÉS DES ÉCHANTILLONS D'ESSAI ÉMETTANT DE LA CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2020   DE 102020005728**

(43) Veröffentlichungstag der Anmeldung:
**23.03.2022   Patentblatt 2022/12**

(73) Patentinhaber: **crino GmbH**
**80807 München (DE)**

(72) Erfinder:
• **Noel, Andreas**
**81373 München (DE)**
• **Zilberman, Ilya**
**81541 München (DE)**

(74) Vertreter: **Thoma, Lorenz**
**Am Rothhang 16**
**82399 Raisting (DE)**

(56) Entgegenhaltungen:
**US-A- 3 813 937     US-B1- 6 572 263**

**Beschreibung**

Die Erfindung betrifft eine Anordnung zur Messung vorbestimmter Qualitätskriterien, von Wärme emittierenden Batteriezellen, wie Lithium-Ionen-Zellen oder dgl., mit einer zumindest wärmedämmend ausgebildeten Prüfkammer und mit einem innerhalb der Prüfkammer angeordneten, zur Aufnahme mindestens einer Batterie dienenden Aufnahmebereich und mit wenigstens einem in der Prüfkammer angeordneten Wärmeleitelement, das an seinen Enden mit wenigsten je einem Wärmeübertragungselement versehen ist, von denen ein erstes Wärmeübertragungselement mit dem Aufnahmebereich wärmeleitend gekoppelt ist.

Aus der US-PS 3,813,937 ist eine Kalorimeter-Anordnung zur Messung der Wärmeabgabe von Nickel-Cadmium-Batterien während deren Entladezyklus bekannt. Diese Messanordnung weist eine wärmeisolierend ausgebildete zylinderische Mantelwandung auf, die zusammen mit einer nicht dargestellten, wärmeisolierenden Decken- und Bodenwandung einen zur Umgebung hin wärmeisolierend ausgebildeten Innenraum umgrenzt. Der Innenraum dient zur Aufnahme der eigentlichen kalorimetrischen Einheit, die aus zwei tellerartigen, überdruckstabilen Schalen gebildet ist, von denen eine kopfüber über der anderen derart angeordnet ist, dass die Vertiefungen der beiden Schalen zusammen einen Aufnahmeraum

bilden, der über den Rand der Schalen verschließbar ist. Innerhalb dieses überdruckstabilen Aufnahmeraumes ist ein Batteriehalter mit einem Träger für eine zu prüfende Batterie vorgesehen. An die Unterseite des Trägers ist in wärmeleitendem Kontakt ein trichterartig ausgebildetes Wärmeübertragungselement herangeführt, womit die von der Batterie im elektrischen Entladebetrieb abgegebene Wärme auf ein Ende eines stabartigen, zur Umgebung hin wärmeisolierend abgeschirmten, beispielsweise aus Kupfer gebildeten Wärmeleitelements abgeleitet wird, dessen zweites Ende mit einem Rippenkörper versehen ist. Dieser taucht in einen zylinderischen, bodenseitig verschlossenen Behälter ein, der mit einer verdampfenden Flüssigkeit, wie Stickstoff, gefüllt ist und als Wärmesenke dient, die durch die Verdampfungstemperatur der Flüssigkeit auf einer konstanten ersten Temperatur gehalten wird.

Der Aufnahmeraum für die zu entladende Batterie wird anhand einer elektrischen Heizung auf einer konstanten zweiten Temperatur gehalten, die höher liegt als die erste Temperatur. Die im elektrischen Entladebetrieb der Batterie abgegebene Wärme wird über das Wärmeleitelement in die Wärmesenke abgeleitet. Die durch diese Wärmeabfuhr resultierende Temperaturdifferenz wird durch die elektrische Heizung wieder ausgeglichen. Die der Heizung zugeführte elektrische Energie ist dabei ein Maß für die im elektrischen Entladebetrieb der Batterie entstehende Wärme.

Der aus der US-PS bekannte Meßaufbau erfordert einen hohen konstruktiven Aufwand und ist damit wegen der damit einhergehenden Kosten und Komplexität, nur zum Einsatz in einem Prüflabor und nicht im Rahmen einer sog. "end of line-Prüfung" in einer Serienfertigung von wärmeemittierenden Prüflingen, insbesondere Batteriezellen, geeignet. Außerdem ist es für die Einhaltung einer konstanten Temperatur an der Wärmesenke erforderlich, dass der Verdampfungsdruck der Flüssigkeit zumindest einigermaßen konstant gehalten wird.

Weiterhin ist aus der Schweizer Patentschrift CH 593 484 eine Vorrichtung zum Messen von Wärmemengen bekannt. Diese Vorrichtung besitzt ein aus gut wärmeleitendem Material gebildetes erstes Gehäuse, innerhalb dem mit Abstand zu den Gehäusewandungen des ersten Gehäuses ein Messaufbau angeordnet ist. Der Messaufbau umfasst ein ebenfalls aus gut wärmeleitendem Material gebildetes zweites Gehäuse, das einen mit einem Deckel verschließbaren Aufnahmeraum aufweist, der zur Einbringung eines wärmeemittierenden Prüflings dient. Unterhalb dieses Aufnahmeraums, in einer durch eine Zwischenwand von diesem getrennten Kammer, ist eine elektrische Wärmequelle in wärmeleitendem Kontakt zu dieser Zwischenwand angeordnet. Unter der Kammer weist der Messaufbau ein Wärmeleitelement auf, das mit einem Endabschnitt wärmeleitend an die Wandungen des zweiten Gehäuse angebunden ist, während sein zweiter Endabschnitt wärmeleitend mit einer als Peltier-Kühlblock ausgebildeten Kältequelle verbunden ist, die als Wärmesenke bezüglich des Aufnahmeraumes dient.

Der Messaufbau ist im Bereich des Deckels und im Bereich des Übergangs des Wärmeleitelementes zum Peltier-Kühlblock gegenüber dem ersten Gehäuse durch Wärmeisolationsmaterial abgestützt, wodurch zwischen dem Messaufbau und dem ersten Gehäuse ein, z.B. durch Vakuumisolation, wärmeisolierender Hohlraum erzeugt ist.

Bei dieser bekannten Messvorrichtung wird die von einem Prüfling emittierte Wärmemenge dadurch ermittelt, dass durch eine Steuereinrichtung einerseits die elektrische Wärmequelle derart angesteuert wird, dass die Gehäusetemperatur und die Gehäuseumgebungstemperatur sich auf gleichem Temperaturniveau befinden. Andererseits wird der als Wärmesenke dienende Peltier-Kühlblock durch die Steuereinrichtung so betrieben, dass sich zwischen dem Gehäuse und dem Peltier-Kühlblock ein konstantes Temperaturgefälle ausbildet. Die über das Wärmleitelement abfließende Wärmemenge entspricht dabei der Summe aus emittierter Wärmemenge des Prüflings und elektrisch zugeführter Wärmemenge. Wird die Messeinrichtung ohne Prüfling betrieben, ergibt sich als über das Wärmeleitelement abfließende Wärmemenge, die Wärmemenge, die durch den Betrieb der elektrischen Wärmequelle zugeführt wird und als Grundlast-Wärmemenge bezeichnet wird. Damit lässt sich die von dem Prüfling emittierte Wärmemenge aus der Differenz zwischen der elektrischen Grundlast-Wärmemenge und der elektrischen Wärmemenge ermitteln.

Diese Messvorrichtung bedingt zur exakten Ermittlung der emittierten Wärmemenge eines Prüflings eine genaue Temperaturführung des Gehäuses, der Gehäuseumgebung sowie des Peltier-Kälteblocks. Eine solche Temperaturführung zieht eine aufwendige und damit kostenintensive Temperatursteuerung nach sich. Auch ist die Wärmeüberleitung des Prüflings auf das Gehäuse unzureichend. Systembedingt ergeben sich auch bei der Messung kleineren Wärmemengen nicht vernachlässigbare Ungenauigkeiten bei der Wärmemengenbestimmung eines Prüflings.

Aus der US 6,572,263 B1 ist eine Vorrichtung zur Bestimmung der Wärmeabgabe von radioaktiven Materialien bekannt, welche ein mehrschalig aufgebautes wärmeisolierendes Gehäuse aufweist, das einen allseitig umschlossenen Behälter umgibt, dessen Behälterraum deckenseitig über einen abnehmbaren Verschluss zugänglich ist und der zur Aufnahme des radioaktiven Materials dient. Der Boden dieses Behälters ist wärmeleitend mit einem ebenso wärmeleitend ausgebildeten Hitzeschild verbunden, das zur Abschirmung der von am Behälterboden festgesetzten Heizelementen abgegebenen Wärme unmittelbar auf im Nahbereich eines am ersten freien Ende einer wärmeleitenden Stange angeordneten Temperatursensors dient. Die Stange ist mit ihrem ersten freien Ende wärmeleitend mit dem abschirmenden Hitzeschild verbunden und ist im Nahbereich seines zweiten freien Endes mit einem weiteren Temperatursensor versehen, das wärmeleitend mit einem Wärmepumpen-Aufbau verbunden ist, der einen kontrollierten Wärmeabfluss von der Stange sicherstellt.

Zur Messung der Wärmeabgabe des in den Behälter einbringbaren radioaktiven Materials werden zunächst ohne dieses Material die am Behälterboden sitzenden Heizelemente aktiviert, deren abgegebene Wärme auch auf die Stange weitergeleitet wird, an der die von den Temperatursensoren erfasste Temperatur durch den Betrieb der Wärmepumpe stabilisiert wird. Die von dem radioaktiven Material abgegebene Wärme wird dadurch gemessen, dass der Temperatursensor am ersten Ende der Stange durch die Veränderung der Temperatur der Heizelemente konstant gehalten wird. Die Verringerung der Energiezufuhr zu den Heizelementen ist ein Maß für die von dem radioaktiven Material abgegebene Wärmemenge.

Wegen der von dem radioaktiven Material ausgehenden Strahlungsgefahr und der von diesem Material abgegebenen hohen Temperatur ist der Vorrichtungsaufbau, insbesondere im Hinblick auf die Wärmeabschirmung, sehr aufwändig und kompliziert. Trotz dieses kostenintensiven Aufbaus ist diese bekannte Vorrichtung nicht zur direkten Bestimmung der Wärmeabgabe des Prüflings sondern nur zur indirekten Wärmeabgabeermittlung des Prüflings, hier des radioaktiven Materials, geeignet.

Der Erfindung liegt die Aufgabe zugrunde, mit einfachen technischen Maßnahmen den Stand der Technik zu verbessern und eine Messvorrichtung bereitzustellen, mit welcher die emittierte Wärmemenge sowohl von in Betrieb als auch im Ruhezustand befindlichen Prüflingen, insbes. Batteriezellen, wie Lithium-Ionen-Batteriezellen, zumindest weitgehend exakt bestimmbar sind.

Diese Aufgabe wird gemäß der Erfindung gelöst, durch eine Anordnung nach Anspruch 1.

Der Begriff Wärme umfasst im Sinne der Erfindung sowohl Temperaturen über als auch unter null Grad Celsius.

Die erfindungsgemäße Lösung zeichnet sich nicht nur durch einen einfachen und somit kostengünstigen Aufbau aus, sondern vor allem auch dadurch, dass die vorgeschlagene Messanordnung durch die Anbindung des Wärmeleitelementes an einen Temperaturregelkreis sowohl isotherm als auch adiabatisch betreibbar ist. Denn durch den Temperaturregelkreis kann auf einfache Weise an dessen Wärmeabgabeschnittstelle eine Wärmesenke oder eine Wärmequelle bereitgestellt werden. Der isotherme Betrieb der erfindungsgemäßen Messanordnung, bei dem die Wärmeabgabeschnittstelle als Wärmesenke betrieben wird, eignet sich besonders für die Bestimmung der Wärmemenge von im Ruhezustand befindlichen Prüflingen, insbes. von BatterieZellen, wie Lithium-Ionen-Batterien, zur Messung des im Ruhezustand, nämlich bei der Selbstentladung solcher Batteriezellen abgegebenen geringen Wärmestrom. Dabei wird der mit Hilfe der erfindungsgemäßen Anordnung der Temperatursensoren am Wärmeleitelement erfassbare Temperaturgradient bestimmt, der proportional dem abgegebenen Wärmestrom. Die erfindungsgemäße Messanordnung eignet sich bei isothermen Betrieb zur Qualitätsbewertung dieser Batteriezellen im Sinne einer sogenannten "end of line-Prüfung".

Im adiabatischen Betrieb der erfindungsgemäßen Messanordnung lässt sich auf einfache Weise der Wärmestrom von im Betrieb befindlichen, wärmeemittierenden Prüflingen, insbes. Batteriezellen, wie Lithium-Ionen-Batterien bestimmen. Bei dieser Betriebsart wird die Wärmeabgabeschnittstelle durch den Temperaturregelkreis als geregelte Wärmequelle betrieben, um eine Temperaturdifferenz entlang des Wärmeleitelementes möglichst gering zu halten bzw. zu vermeiden. Die im Betrieb des wärmeemittierenden Prüflings, insbes. wärmeemittierende Batteriezellen, abgegebene Wärmemenge kann nicht über das Wärmeleitelement abfließen kann, sondern ist unmittelbar durch entsprechende, dem Prüfling zugeordnete Sensoren in Kombination mit einer Auswerteeinheit bestimmbar.

Durch die Möglichkeit, die Wärmeabgabeschnittstelle des Temperaturregelkreises, durch dessen entsprechende Steuerung sowohl als Wärmesenke als auch als Wärmequelle betreiben zu können, lässt sich die Messanordnung durch die erfindungsgemäße Ausbildung und Einbindung des Wärmeleitelementes sowohl isotherm als auch adiabatisch betreiben. Damit ist nicht nur für den Laborbetrieb, sondern insbesondere im Produktionsumfeld eine einfache, zeiteffizient arbeitende und dennoch sehr präzise Qualitätsanalyse für Wärme emittierende Prüflinge, insbesondere Batteriezellen, wie Lithium-Ionen-Batterien, bereitgestellt.

Gemäß einer bevorzugten Ausführungsform des Gegenstandes der Erfindung ist vorgesehen, dass die Wärmeabgabeschnittstelle als Peltier-Element ausgebildet ist, mit dem das zweite Wärmeübertragungselement wärmeleitend verbunden ist.

Durch eine solche Ausbildung einer Wärmeabgabeschnittstelle lässt sich besonders einfach und kostengünstig eine präzis arbeitende und gut bezüglich seiner Temperatur regelbare Wärmequelle bzw. Wärmesenke bereitstellen.

Entsprechend einer alternativen Ausführungsform des Gegenstandes der Erfindung ist vorgesehen, dass die Wärmeabgabeschnittstelle als Wärmetauscher eines umkehrbaren Kältekreislaufes, insbes. eines Kompressionskältekreislaufes, ausgebildet ist, mit dem das zweite Wärmeübertragungselement des Wärmeleitelementes wärmeleitend verbunden ist.

Durch die Umkehrung des Kältekreislaufes, beispielsweise durch ein Umschaltventil im Kältekreislauf, ist auf einfache Weise die Funktion des als Wärmeabgabeschnittstelle dienenden Wärmetauschers von Wärmequelle in Wärmesenke und umgekehrt änderbar, dessen Temperatur durch eine entsprechende Anordnung von Temperatursensoren am Wärmetauscher einfach und genau regelbar ist.

Nach einer weiteren alternativen Ausführungsform des Gegenstandes der Erfindung ist vorgesehen, dass die Wärmeabgabeschnittstelle als Verdampferabschnitt einer Heatpipe in Kombination mit einer elektrischen Widerstandsheizung ausgebildet ist, mit denen das zweite Wärmeübertragungselement wärmeleitend verbunden ist.

Auch bei einer solchen Ausführung der Wärmeabgabeschnittstelle lässt sich eine exakte Temperaturführung der Wärmeabgabeschnittstelle, unabhängig davon, ob diese als Wärmesenke oder als Wärmequelle betrieben wird, erzielen.

Nach einer weiteren bevorzugten Ausführungsform des Gegenstandes der Erfindung ist vorgesehen, dass das Zwischenteil ein Querschnittsfläche-Längenverhältnis aufweist, das gleich oder kleiner dem Verhältnis ist, das sich aus der Kapazität der zu prüfenden Batteriezelle und dem hundertfachen Wert der thermischen Leitfähigkeit des Zwischenteiles ergibt ( $\frac{A}{l} \leq \frac{C}{100\lambda}$ ) mit Querschnittsfläche A in [m²], Länge l in [m], Kapazität C [Ah] und die thermische Leitfähigkeit in [ $\frac{W}{mK}$ ]

Durch eine derartige Bemessung des zwischen den beiden Wärmeübertragungselementen des Wärmeleitelementes angeordneten Zwischenteils lässt sich eine besonders gute Erfassung des Wärmeflusses von im Ruhezustand befindlichen Wärme emittierenden Prüflingen, insbesondere Batteriezellen, wie Lithium-Ionen-Batterien erzielen, da sich der dabei insbesondere bei der Selbstentladung von Lithium-Ionen-Batterien abgegebene Wärmestrom exakt, insbesondere in Kombination mit der erfindungsgemäßen Anordnung der Temperatursensoren an diesem Zwischenteil erfassen lässt.

Bereits eine vergleichsweise genaue Wärmeflusserfassung mit der am Wärmeleitelement durch die Temperatursensoren erfassten Temperatur ergibt sich, wenn nach einer weiteren vorteilhaften Ausgestaltung des Gegenstandes der Erfindung vorgesehen ist, dass der Abstand der beiden Temperatursensoren wenigstens der halben Länge des sich zwischen den Wärmeübertragungselementen erstreckenden Zwischenteiles entspricht.

Eine besonders genaue Erfassung des Temperaturgradienten am Wärmeleitelement ist erzielbar, wenn nach einer besonders bevorzugten Ausführungsform des Gegenstandes der Erfindung vorgesehen ist, dass der Abstand der beiden Temperatursensoren derart gewählt ist, dass diese im Nahbereich der Wärmeübertragungselemente angeordnet sind.

Nicht nur besonders einfach und kostengünstig herstellbar sondern auch besonders genau im Sinne einer exakten Temperaturerfassung dimensionierbar ist das Zwischenteil des Wärmeleitelementes insbesondere für den Einsatz der Wärmestromerfassung bei der Selbstentladung von Lithium-Ionen-Batterien, wenn nach einer nächsten bevorzugten Ausführungsform des Gegenstandes der Erfindung vorgesehen ist, dass das Zwischenteil des Wärmeleitelementes zumindest annähernd stangenähnlich, insbesondere mit einem Kreisquerschnitt, oder als quaderförmiges Flachprofil ausgebildet ist. Mit einem Kreisquerschnitt lassen sich besonders günstige thermische Eigenschaften für das Zwischenteil erzielen.

Entsprechend einer weiteren bevorzugten Ausführungsform des Gegenstandes der Erfindung ist vorgesehen, dass das Zwischenteil mit seinen Enden, insbes. Stirnseiten, mit den Wärmeübertragungselementen verbunden ist und dass das Zwischenteil und die Wärmeübertragungselemente einstückig, vorzugsweise jedoch einstoffig ausgebildet sind.

Eine solche Ausführung des Wärmeleitelementes lässt sich besonders einfach und damit kostengünstig und dennoch exakt herstellen. Überdies wird insbesondere durch die einstoffige Ausführungsform auf einfache Weise eine besonders gute wärmeleitende Anbindung des Zwischenteils zu den an dessen Enden, insbes. Stirnseiten, vorgesehenen Wärmeübertragungselementen erzielt.

Nach einer nächsten besonders bevorzugten Ausführungsform des Gegenstandes der Erfindung ist vorgesehen, dass das Wärmeleitelement im Längsschnitt zumindest annähernd H-, M-, N-, W oder U-förmig oder zumindest annähernd als Rechteckrohr oder Quadratrohr-ausgebildet ist.

Ein derartig ausgebildetes Wärmeleitelement ermöglicht nicht nur eine besonders einfache und Ausbildung der Wärmeübertragungselemente und deren großflächige wärmeleitende Anbindung an den Aufnahmebereich für den Prüfling bzw. an die Wärmeabgabeschnittstelle des Temperaturregelkreises sondern auch gute Temperaturerfassung und Wärmeleitung sowohl im isothermen als auch im adiabatischen Betrieb der erfindungsgemäßen Messanordnung.

Besonders einfach und dennoch maßgenau herstellen lässt sich ein Wärmeleitelement mit unterschiedlichen Dimensionen und Längsschnitten, wenn nach einer weiteren besonders bevorzugten Ausführungsform des Gegenstandes der Erfindung vorgesehen ist, dass das Wärmeleitelement spanabhebend oder spanlos gefertigt ist.

Besonders kostengünstig mit hoher Variabilität herstellbar ist ein Wärmeleitelement, wenn nach einer nächsten vorteilhaften Ausgestaltung des Gegenstandes der Erfindung vorgesehen ist, dass das Wärmeleitelement als Strangpressprofil oder als Blechbiegeteil ausgebildet ist.

Gemäß einer weiteren vorteilhaften Ausgestaltung der Erfindung ist vorgesehen, dass die Wärmeübertragungselemente zu ihrer wärmeleitenden Anbindung an den Aufnahmebereich bzw. an die Wärmeabgabeschnittstelle mit einer Wärmekontaktfläche versehen sind, die über eine wärmeleitende Zwischenlage, insbesondere eine Wärmeleitpaste, mit dem Aufnahmebereich bzw. der Wärmeabgabeschnittstelle wärmeleitend verbunden sind.

Hierdurch ist eine Temperaturüberleitung mit hohem Wirkungsgrad bereitgestellt.

Besonders exakt mit dennoch geringen Produktionskosten herstellbar ist ein erfindungsgemäßes Wärmeleitelement, wenn nach einer weiteren besonders bevorzugten Ausführungsform des Gegenstandes der Erfindung vorgesehen ist, dass der Aufnahmebereich in das erste Wärmeübertragungselement integriert ist, insbes. einstoffig mit diesem Wärmeübertragungselement zu einer Einheit verbunden ist.

Gleichzeitig lässt sich mit dieser Ausführung eine besonders günstige Temperaturüberleitung des Aufnahmebereich zum Wärmeleitelement erzielen.

Nach einer nächsten bevorzugten Ausführungsform des Gegenstandes der Erfindung ist vorgesehen, dass der Aufnahmebereich für den Prüfling, zumindest weitgehend an dessen Außengeometrie angepasst ist und über eine wärmeleitend ausgebildete Zwischenlage, insbesondere als sog. Gap-Filler dienende elastische Wärmeleitfolie, die den Prüfling zumindest weitgehend umschließt, wärmeleitend mit dem Prüfling verbunden ist.

Durch eine solche Ausführung des Aufnahmebereiches ist eine besonders gezielte und damit hochwirksame Temperaturüberleitung des Prüflings auf die den Aufnahmebereich umgrenzenden Wandungen erreichbar.

Gemäß einer weiteren vorteilhaften Ausgestaltung des Gegenstandes der Erfindung ist vorgesehen, dass der Prüfling innerhalb des Aufnahmeraums mit wenigstens einem Temperatursensor in wärmeleitenden Kontakt steht.

Dadurch wird sowohl im isothermen als auch im adiabatischen Betrieb der Messanordnung eine exakte Bestimmung der abgegebenen Wärmemenge des Prüflings, insbesondere der Batteriezellen, wie Lithium-Ionen-Batterien, ermöglicht.

Ein von den Umgebungsbedingungen zumindest weitgehend unbeeinflusster Betrieb der Messanordnung ist erzielt, wenn entsprechend einer weiteren bevorzugten Ausführungsform des Gegenstandes der Erfindung ist vorgesehen, dass die Prüfkammer und das Wärmeleitelement zur Umgebung hin von einer zumindest wärmedämmenden, vorzugsweise jedoch wärmeisolierenden Abschirmung umgeben sind, die bis an das zweite Wärmeübertragungselement herangeführt ist.

Außerdem ist durch diese wärmedämmenden bzw. wärmeisolierenden Maßnahmen sichergestellt, dass die von dem Prüfling, insbesondere von Lithium-Ionen-Batterien bei deren Selbstentladung abgegebene geringe Wärmemenge zumindest im wesentlich dem Wärmeleitelement und damit den dort angeordneten Temperatursensoren zur Erfassung der durch die Wärmemenge initiierten Temperaturänderung zugeführt ist.

Entsprechend einer weiteren bevorzugten Ausführungsform des Gegenstandes der Erfindung ist vorgesehen, dass die Abschirmung mit einem Temperatursensor versehen ist.

Hierdurch sind Umgebungseinflüsse bei der Wärmemengenmessung von Wärme emittierenden Prüflingen besonders einfach erfassbar und bei der Messung der Wärmemenge berücksichtigbar.

Nach einer besonders bevorzugten Ausführungsform des Gegenstandes der Erfindung ist vorgesehen, dass eine Auswerteeinheit vorgesehen ist, die ausgebildet ist, die Sensorsignale der Temperatursensoren zu erfassen und zu bewerten und basierend darauf bei Bedarf den TemperaturRegelkreis zu aktivieren und die ausgebildet ist, insbes. basierend auf den Signalen der dem Wärmeleitelement zugeordneten Temperatursensoren den Wärmestrom entlang des Wärmeleitelementes zu ermitteln.

Durch den Einsatz einer solchen Auswerteeinheit ist die Messanordnung unmittelbar im Produktionsumfeld von Wärme emittierenden Prüflingen, insbesondere Batteriezellen, wie Lithium-Ionen-Batterien, zur zumindest weitgehend automatisch ablaufenden Prüfung vorgegebener Qualitätskriterien, wie z.B. bei Batterien, deren abgegebene Wärmemenge bei der Selbstentladung oder bei deren Betrieb überprüfbar.

Gemäß einer letzten bevorzugten Ausführungsform des Gegenstandes der Erfindung ist vorgesehen, dass die Auswerteeinheit zur Bestimmung des Wärmestromes wenigstens einen Multiplexer aufweist, der die dem Wärmeleitelement zugeordneten Temperatursensoren zur Erfassung des Temperaturgradienten am Wärmeleitelement in vorgebbaren Zeitintervallen, insbes. in Zeitintervallen von 0,001s und 10s, ansteuert.

Durch eine derartige Ansteuerung der am Wärmeleitelement vorgesehenen Temperatursensoren ist die durch Ansteuerung gegebenenfalls hervorgerufene Beeinflussung des Messergebnisses besonders gering.

Die Erfindung ist in der nachfolgenden Beschreibung anhand eines in der beigefügten Zeichnung dargestellten Ausführungsbeispieles erläutert. Es zeigen:

Figur 1: in vereinfachter schematischer Darstellung die erfinderische Messanordnung mit einem ersten Ausführungsbeispiel eines spanabhebend erzeugten, in Draufsicht gezeigten Wärmeleitelementes mit in dessen Wärmeübertragungselement integrierten Aufnahmebereich für einen als Rundbatteriezelle ausgeführten Batteriezellen-Prüfling,

Figur 2. ein weiteres Ausführungsbeispiel eines als Blechbiegeteil ausgebildeten Wärmeübertragungselementes mit integriertem Aufnahmebereich für einen als Rundbatteriezelle ausgebildeten Prüfling, in raumbildlicher Ansicht von oben,

Figur 3: ein drittes Ausführungsbeispiel eines als Strangpressprofil ausgebildeten Wärmeübertragungselementes mit integriertem Aufnahmebereich für einen als Rundbatteriezelle ausgebildeten Prüfling, in raumbildlicher Ansicht von vorne,

Figur 4: ein viertes Ausführungsbeispiel eines als Blechzuschnitt ausgebildeten Wärmeübertragungselementes mit integriertem Aufnahmebereich für als prismatische oder Pouch-Batteriezellen ausgebildete Prüflinge, in raumbildlicher Ansicht von oben,

Figur 5: ein fünftes Ausführungsbeispiel eines spanabhebend hergestellten Wärmeübertragungselementes mit integriertem Aufnahmebereich für als prismatische oder Pouch-Batteriezellen ausgebildete Prüflinge, in raumbildlicher Ansicht von oben,

Figur 6: ein sechstes Ausführungsbeispiel eines aus Druckguss hergestellten Wärmeübertragungselementes mit integriertem Aufnahmebereich für als prismatische oder Pouch-Batteriezellen ausgebildete Prüflinge, in raumbildlicher Ansicht von vorne,

Figur 7: ein erstes Ausführungsbeispiel eines als Blechausschnitt ausgebildeten Wärmeübertragungselementes ohne integrierten Aufnahmebereich für einen Batteriezellenprüfling, in raumbildlicher Ansicht von oben,

Figur 8: ein zweites Ausführungsbeispiel eines als Strangpressprofil ausgebildeten Wärmeübertragungselementes ohne integrierten Aufnahmebereich für einen Batteriezellenprüfling, in raumbildlicher Ansicht von vorne, und

Figur 9: ein drittes Ausführungsbeispiel eines als Schweißkonstruktion ausgebildeten Wärmeübertragungselementes ohne integrierten Aufnahmebereich für einen Batteriezellenprüfling, in raumbildlicher Ansicht von vorne.

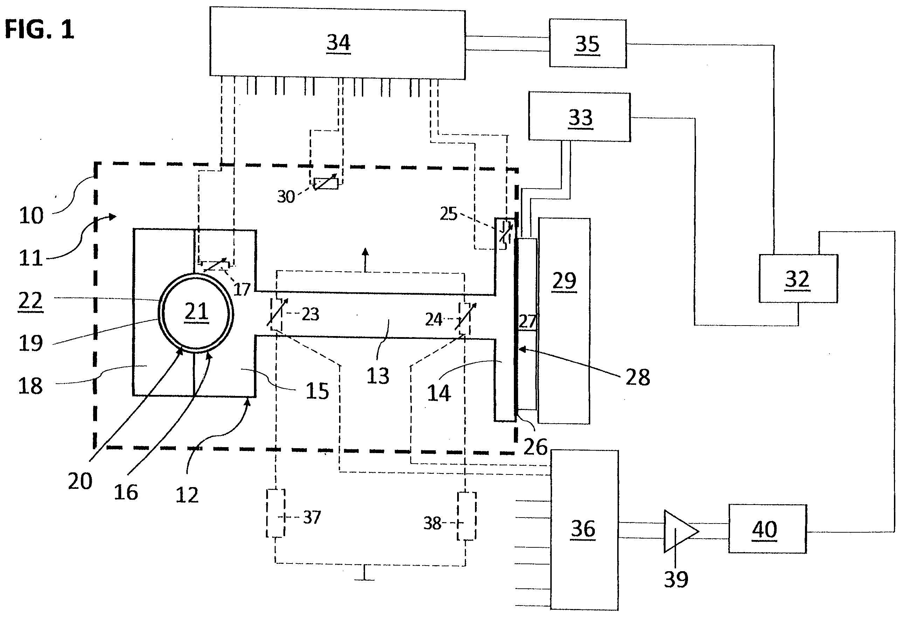

Gemäß Figur 1 ist eine Messanordnung 1 gezeigt, die eine durch eine strichlierte Linie angedeutete, wärmeisolierend ausgebildete Prüfkammer 10 aufweist, die durch ihre nicht näher gezeigten, wärmeisolierend ausgebildeten Wandungen einen zu ihrer Umgebung hin wärmeisolierten Innenraum 11 umgrenzt.

Innerhalb des Innenraumes 11 ist ein im vorliegenden Fall spanabhebend, einstoffig ausgebildetes Wärmeleitelement 12 angeordnet, dass z.B. aus gut wärmeleitendem Material, wie Aluminium, Kupfer oder Legierungen davon, ausgeführt ist. Das Wärmeleitelement 12 weist ein zumindest quaderförmig ausgebildetes Zwischenteil 13 auf, das an seinen gegenüberliegenden Enden je mit einem Wärmeübertragungselement 14 bzw. 15 ausgestattet ist. Die im vorliegenden Fall quaderförmig ausgebildeten Wärmeübertragungselemente 14 und 15 sind höhengleich zum Zwischenteil 13 angeordnet und springen mit ihren freien seitlichen Quaderenden gegenüber dem quaderförmigen Zwischenteil 13 seitlich derart vor, dass flächengleiche Abschnitte gebildet sind, wodurch das Wärmeleitelement 12 in Draufsicht einen H-förmigen Längsschnitt aufweist. Von den beiden Wärmeübertragungselementen 14 und 15 besitzt das Letztere eine größere Wandstärke und weist einen in etwa mittig zu seiner Breite ausgerichteten, randoffenen Aufnahmebereich 16 auf, der in Art einer Halbschale in das Wärmeübertragungselements 15, unmittelbar eingeformt ist, dessen Längserstreckung über die gesamte Höhe des Wärmeübertragungselementes 15 verläuft und symmetrisch zur Breite des Zwischenteiles 13 ausgerichtet ist. In den Aufnahmebereich 16 ist eine bespielsweise als NTC oder PTC ausgebildeter Temperatursensor 17 derart integriert, dass er gegenüber der halbschalenartigen Innenseite des Aufnahmebereichs 16 geringfügig vorsteht. Dieser ist mit einem Wandteil 18 abdeckbar, in den ebenso wie in das Wärmeübertragungselement 15 eine halbschalenartiger Aufnahmebereich 19 eingeformt ist, der zusammen mit dem Aufnahmebereich 16 bei am Wärmeübertragungselement 15 festgesetztem Wandteil 18 einen Aufnahmeraum 20 bildet, in den im vorliegenden Fall eine wärmeemittierender Prüfling 21 in Form einer Lithium-Ionen-Rundzelle 18650 einbringbar ist, deren Temperatur von dem Temperatursensor 17 erfassbar ist, der die Einbringung der Batteriezelle in den Aufnahmebereich 16 nicht behindert. Der Aufnahmeraum 20 ist durch die lösbare Befestigung des Wandteiles 18 gut zugänglich und beschickbar. Der Radius des halbschalenartigen Aufnahmebereichs 16 und des Aufnahmebereichs 19 sind derart auf den Durchmesser der zu prüfenden Lithium-Ionen-Rundzelle 21 abgestimmt, dass die Lithium-Ionen-Rundzelle 21 mit ihrer Oberfläche, unter Anwendung einer wärmeleitenden und elastisch ausgebildeten Zwischenlage 22, wie beispielsweise eine Wärmeleitfolie, ganzflächig an den Innenseiten der Aufnahmebereiche 16 und 19 anliegt und die von der Batteriezelle 21 abgegebene Wärme auf das Wärmeübertragungselement 15 übertragen wird.

Neben dem Temperatursensor 17 ist das Wärmeleitelement 12 an seinem quaderförmig ausgebildeten Zwischenteil 13 mit zwei weiteren, z.B. als PTC oder NTC ausgebildete Temperatursensoren 23 und 24 ausgestattet, von denen im vorliegenden Fall der Temperatursensor 23 im Nahbereich des Wärmeübertragungselementes 15 und der Temperatursensor 24 im Nahbereich des Wärmeübertragungselementes 14 vorgesehen ist.

Im Nahbereich einer seiner seitlich vorspringenden Enden ist das Wärmeübertragungselement 15 mit einem beispielsweise als PTC oder NTC ausgebildeten Temperatursensor 25 wärmeleitend verbunden und mit seiner vom Zwischenteil 13 abgewandten Außenseite wärmeleitend, unter Anwendung einer wärmeleitenden und elastisch ausgebildeten Zwischenlage 26, mit einer, im vorliegenden Ausführungsbeispiel zu einem Peltier-Element 27 gehörenden Wärmeabgabeschnittstelle 28 verbunden. Diese ist in diesem Fall durch die Kaltseite des Peltier-Elementes 27 gebildet und noch innerhalb des Innenraumes 11 der wärmeisolierenden Prüfkammer 10 angeordnet. Das Peltier-Element 27 ist im vorliegenden Ausführungsbeispiel auf seiner Warmseite zur effizienteren Wärmeabfuhr mit einem Kühlkörper 29 in wärmeleitendem Kontakt. Im Innenraum 11 der Prüfkammer 10 ist ein weiterer Temperatursensor 30 zur Erfassung der Innenraumtemperatur der Prüfkammer 10 angeordnet.

Das Peltier-Element 27 ist Teil eines Temperaturregelkreises 31, der einen als Auswerteeinheit dienenden Mikroprozessor 32 zur Steuerung einer Leistungselektronik 33 aufweist, durch die die Kälteleistung des Peltier-Elementes 27 für den Fall einstellbar ist, dass die Messanordnung isotherm betrieben wird, d.h. die vom Batteriezellen-Prüfling 21 im Außerbetriebs-Zustand im Rahmen des Entladevorganges abgegebene Wärmemenge zu dem als Wärmesenke wirkenden Peltier-Element 27 abgeleitet wird.

Neben der Steuerung der Leistungselektronik 33 dient der Mikroprozessor 32 zur Ansteuerung eines ersten, im vorliegenden Fall analogen Multiplexers 34, mit einem Steuereingang, einem Ausgang und n-Eingängen, von denen ausgewählte Eingänge mit den elektrischen Spannungssignalen der Temperatursensoren 17, 25 und 30 beschaltet sind, die wie der Multiplexer 34 ebenso Bestandteil des Temperaturregelkreises 31 sind. Das über den Steuereingang des Multiplexers 34 an den Ausgang durchgeschaltete Eingangssignal eines der Temperatursensoren 17, 25 und 30 ist als Ausgangssignal des Multiplexers 34 einem Analog-Digital-Wandler 35 zugeführt, der dem das Ausgangssignal des Mulitplexers 34 verarbeitenden Mikroprozessor 32 eingangsseitig vorgeschaltet ist.

Der Mikroprozessor 32 dient außerdem zur Ansteuerung eines zweiten, ebenso analogen Multiplexers 36, mit einem Steuereingang, einem Ausgang und n-Eingängen, von denen ausgewählte Eingänge mit den elektrischen Spannungssignalen der Temperatursensoren 23 und 24 beschaltet sind, die am Zwischenteil 13 vorgesehen sind. Zu jedem der Temperatursensoren 23 und 24 ist je ein als Referenz dienender Festwiderstand 37 und 38 in Reihe geschaltet, wodurch eine Wheatstonsche-Brückenschaltung gebildet ist, deren Differenzspannungssignal durch Aktivieren ausgewählter Eingänge des Multiplexers 36 in vorbestimmten Zeitfenstern, die in der Größenordnung von 0,001s bis 10s liegen können, einer im vorliegenden Fall als Differenzverstärker ausgebildeten Verstärkerschaltung 39 zugeführt ist. Das analoge Ausgangssignal des Differenzverstärkers 39 wird von einem der Verstärkerschaltung 39 nachgeschalteten Analog-Digital-Wandler 40 in ein digitales Eingangssignal für den Mikroprozessor 32 umgewandelt.

Bei der Messung der bei der Selbstentladung einer Batteriezelle 21 entstehenden Wärme wird die über eine vorbestimmte Zeitdauer abgegebene Wärmemenge der nicht aktivierten Batteriezelle 21 ermittelt und gilt als eines der wesentlichen Qualitätskriterien einer solchen Batteriezelle.

Der wärmeabgebende Prüfling, im vorliegenden Fall die zu prüfende Lithium-Ionen-Rundzelle, wird hierzu zusammen mit der sie umgebenden Zwischenlage 22 in den Aufnahmeraum 20 eingebracht, wodurch die Batteriezelle 21 über die Zwischenlage 22 mit den Wandungen des Aufnahmeraums 20 thermisch kontaktiert ist und die Temperatur der Batteriezelle 21 mittels des Temperatursensors 17 erfassbar ist.

Die Messanordnung 1 wird bei der vorstehend erwähnten Überprüfung der Batteriezelle 21 isotherm betrieben, d.h. zum einen, dass durch die Wärmeisolation der Prüfkammer 10 und deren Temperaturüberwachung anhand des Temperatursensors 30 die Temperatur im Innenraum 11 der Prüfkammer 10 zumindest weitgehend konstant gehalten wird , um dafür Sorge zu tragen, dass die von der Batteriezelle 21 emittierte Wärme nicht zur Umgebung der Prüfkammer 10 hin, sondern kontrolliert entlang des Wärmeleitelementes 12 zu dem als Wärmesenke dienenden Peltier-Element 27 abfließt, dessen Wärmesenkenwirkung durch den Temperatursensor 25 überwacht wird. Die entlang des Wärmeelements 12 abfließende Wärme wird anhand der am Zwischenteil 13 im Abstand zueinander angeordneten Temperatursensoren 23 und 24 in vorbestimmten Zeitfenstern des entsprechend von dem Mikroprozessor 32 gesteuerten Multiplexers 36 erfasst und anhand der Wheatstone-Brückenschaltung, die aus dem Temperatursensoren 23 und 24 und den Festwiderständen 37 und 38 gebildet ist, durch Erzeugung von Differenzspannungssignalen erfasst. Die sich ergebenden Differenzspannungssignale werden von dem Differenzverstärker 39 verstärkt und durch den Analog-Digital-Wandler 40 in ein digitales Eingangssignal für den Mikroprozessor 32 umgewandelt, der dieses dann bewertet.

Im Rahmen des Messvorganges einer Batteriezelle 21 werden die Temperatursensoren 17, 25 und 30 in vorbestimmten Zeitintervallen von dem Multiplexer 34 beschaltet, um die von den Temperatursensoren 17, 25 und 30 erfassten, als Analogsignale vorliegenden Momentantemperaturen durch den Analog-Digital-Wandler 35 zu Digitalsignalen zu wandeln und dem Mikroprozessor 32 als Eingangssignale zur Bewertung zuzuführen. Bei einer Abweichung der erfassten Sollwerte von in dem im Mikroprozessor 32 hinterlegten Istwerten wird die die Kälteleistung des Peltier-Elementes 27 steuernde Leistungselektronik 33 entsprechend der vom Mikroprozessor 32 ermittelten Abweichung so angesteuert, dass die Kälteleistung des Peltier-Elementes 27 verringert oder erhöht oder konstant gehalten wird.

Die sich an der Wheatstone-Brückenschaltung einstellende Spannungsdifferenz ist ein Maß der sich an den Messstellen des Wärmeleitelements 12 sich ergebenden Temperaturdifferenz, die proportional dem vom wärmeemittierenden Prüfling 21, im vorliegenden Fall der Lithium-Ionen-Zelle, über die Prüfdauer abgegebenen Wärmestrom ist.

Ein Wesentlicher Vorteil der erfinderischen Messanordnung 1ist, dass diese bei identischem Messaufbau sowohl isotherm als auch adiabatisch betreibbar ist.

Im adiabatischen Betrieb der Messanordnung 1 wird das Wärmeleitelement 12 durch die anhand des Temperaturregelkreises 31 gesteuerte Wärmeabgabeschnittstelle, im vorliegenden Ausführungsbeispiel das Peltier-Element 27, auf einer vorbestimmten konstanten Temperatur derart gehalten, dass sich zwischen den Messpunkten der Temperatursensoren 23 und 24 entweder eine konstante Temperaturdifferenz oder keine Temperaturdifferenz einstellt. Dies wird dadurch sichergestellt, dass die Temperatursignale der Temperatursensoren 23 und 24 durch den Muliplexer 36 kontinuierlich abgefragt werden. Durch die genannte Art der Temperatureinstellung auf dem Wärmeleitelement 12 ist die durch den Temperatursensor 17 erfasste Temperatur des wärmeemittierenden Prüflings 21, wie z.B. der Lithium-Ionen-Rundzelle, ein Maß für dessen Wärmeabgabe sowohl im elektrisch aktiven als auch im elektrisch passiven Zustand der Batteriezelle 21.

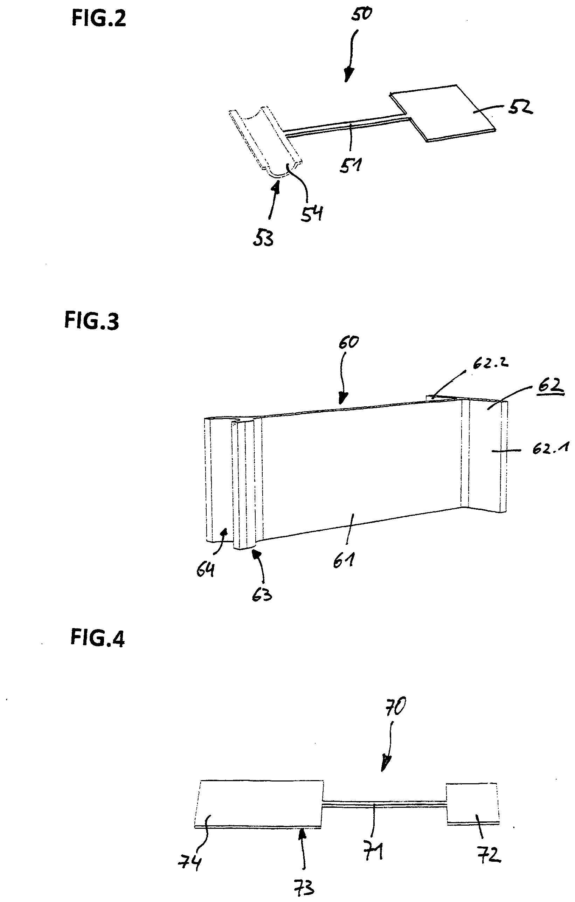

Gemäß Figur 2 ist ein weiteres Ausführungsbeispiel eines Wärmeleitelementes 50 gezeigt, dass im vorliegenden Fall einstoffig als Blechbiegeteil ausgebildet ist und dass aus gut wärmeleitendem Material wie Aluminium oder Kupferblech mit vorbestimmter Blechdicke ausgeschnitten ist.

Das Wärmeleitelement 50 ist, wie das Wärmeleitelement 12, H-förmig ausgebildet, wie insbesondere die Draufsicht auf das Wärmeleitelement 50 zeigt. Die H-förmige Gestalt wird hier durch ein zumindest stangenähnlich ausgebildetes Zwischenteil 51 und durch jeweils ein an dessen gegenüberliegenden Enden angeordnetes Wärmeübertragungselement 52 bzw. 53 gebildet. Von den Wärmeübertragungselementen 52 und 53 ist das Wärmeübertragungselement 52 flachprofilig mit einem zumindest im Wesentlichen quadratischen Grundriss ausgebildet und dient auf seiner vom Zwischenteil 51 abgewandten Außenseite als Wärmekontaktfläche für die Wärmeabgabeschnittsstelle. Das Wärmeübertragungselement 53 besitzt einen im Querschnitt halbkreisförmigen Aufnahmebereich 54, der in den ursprünglich flachprofilig ausgebildeten, quadratischen Blechzuschnitt in Art einer Halbschale eingeformt ist und der im vorliegenden Ausführungsbeispiel zur Aufnahme einer Lithium-Ionen-Rundzelle 18650 dient. Der Aufnahmebereich 54 ist mit einem nicht dargestellten, aus gut wärmeleitenden Material, wie Aluminium oder dgl, gefertigten Wandteil verschließbar, in das ein als Halbschale ausgebildeter Aufnahmebereich spanlos eingeformt ist, der zusammen mit dem Aufnahmebereich 54 einen nicht dargestellten Aufnahmeraum zur wärmeleitenden Halterung einer Lithium-Ionen-Rundzelle 18650 dient, die unter Zwischenlage einer elastisch nachgiebigen, ebenso nicht gezeigten wärmeleitenden Folie in wärmeleitendem Kontakt zum Wandteil und dem Aufnahmeraum 54 gehalten ist.

In Figur 3 ist ein Wärmeleitelement 60 gezeigt, dass bezüglich seiner Geometrie analog zu dem unter Figur 1 gezeigten Wärmeleitelement 12 ausgebildet ist und Draufsicht H-förmig ausgebildet ist. Das Wärmeleitelement 60 ist, wie das Wärmeleitelement 12, einstoffig ausgeführt, jedoch im Unterschied zu diesem, spanlos als Strangpressprofil ausgebildet. Dieses Strangpressprofil weist einen quaderförmigen Quersteg auf, der als Zwischenteil 61 dient und der an seinen gegenüberliegenden Enden je ein Wärmeübertragungselement 62 bzw. 63 trägt. Von den beiden Wärmeübertragungselementen 62 und 63 ist das Wärmeübertragungselement 62 als Quader ausgebildet, der mit einer seiner großflächigen Seitenflächen derart mit dem Zwischenteil 61 verbunden ist, dass zwei bezüglich der großflächigen Seitenflächen des Zwischenteil 61 seitlich vorspringende, gleichgroße Randstreifen 62.1 und 62.2 gebildet sind, die höhenbündig zum Zwischenteil 61 verlaufen und die zum Zwischenteil 61 jeweils einen Zwischenwinkel von 90° einschließen. Auf seiner vom Zwischenteil 61 abgewandten Außenseite besitzt das Wärmeübertragungselement 62 eine Wärmekontaktfläche für die Wärmeabgabeschnittstelle.

Das Wärmeübertragungselement 63 ist wie das Wärmeübertragungselement 62 höhenbündig zum Zwischenteil 61 angeordnet und weist einen in Art einer Halbschale ausgebildeten Aufnahmebereich 64 für als Rundbatteriezellen ausgeführte Batteriezellen-Prüflinge 21 auf. Der Aufnahmebereich 64 ist in das Wärmeübertragungselement 63 derart eingeformt, dass er zu gleichen Teilen gegenüber den seitlichen Begrenzungsflächen des Zwischenteils 61 vorspringt, wodurch in Verbindung mit dem Zwischenteil 61 und den vorspringenden Randstreifen des Wärmeübertragungselementes 62 das Wärmeleitelement 64 in Draufsicht H-förmig ausgebildet ist. Das Wärmeübertragungselement 63 ist auf seiner vom Zwischenteil 61 abgewandten Seite randoffen ausgebildet, wodurch eine Beschickungsöffnung für Aufnahmebereich 64 erzeugt ist. Der Aufnahmeraum 64 ist mit einem nicht dargestellten, aus gut wärmeleitenden Material, wie Aluminium od. dgl. Hergestellten Wandteil abdeckbar, in das ein ebenso als Halbschale ausgebildeter Aufnahmebereich spanlos eingeformt ist, der zusammen mit dem Aufnahmebereich 64 einen nicht dargestellten Aufnahmeraum zur wärmeleitenden Halterung einer Lithium-Ionen-Rundzelle 18650 dient, die unter Zwischenlage einer elastisch nachgiebigen, ebenso nicht gezeigten wärmeleitenden Folie in wärmeleitendem Kontakt zum Wandteil und dem Aufnahmeraum 64 gehaltert ist.

Figur 4 zeigt eine weitere Ausführungsform eines Wärmleitelementes 70, dass wie das Wärmeleitelement 50 einstoffig aus einem Blechzuschnitt hergestellt ist. Das Wärmeleitelement 70 ist wie das Wärmeleitelement 12 und das Wärmeleitelement 50 -förmig ausgebildet, wie insbesondere die Draufsicht auf das Wärmeleitelement 70 zeigt. Die H-förmige Gestalt wird für das Wärmeleitelement 70 durch ein zumindest stangenähnlich ausgebildetes Zwischenteil 71 und durch jeweils ein an dessen gegenüberliegenden Enden angeordneten Wärmeübertragungselement 72 bzw. 73 erzeugt, die flächenbündig an das Zwischenteil 71 anschließen. Von den Wärmeübertragungselementen 72 und 73 ist das Wärmeübertragungselement 72 als Quader mit zumindest im Wesentlichen quadratischen Seitenflächen ausgebildet, die in der Ebene der Seitenflächen des Zwischenteiles 71 liegen. Eine der quadratischen Seitenflächen dient als Wärmekontaktfläche für die Wärmeabgabeschnittsstelle. Bezüglich des Zwischenteiles 71 springt das quaderartig ausgebildete Wärmeübertragungselement 72 mit jeweils gleichflächigen Randabschnitten seitlich vor, wodurch eine besonders gute Wärmeübertragung vom Zwischenteil 71 auf das Wärmeübertragungselement 72 ermöglicht ist. Das Wärmeübertragungselement 73 ist wie das Wärmeübertragungselement 72 als Quader ausgebildet, der jedoch rechteckig ausgeführte Seitenflächen besitzt. An das Wärmeübertragungselement 73 ist übergangslos zu dessen freien Ende hin ein Aufnahmebereich 74 angegliedert, der zur Wärmeableitung für prismatisch ausgebildete Batteriezellen oder sog. Pouch-Batteriezellen dient. Der Aufnahmebereich 74 ist hinsichtlich seiner Fläche so an die wärmeabgebende Oberfläche der prismatisch ausgebildeten Batteriezellen oder der Pouch-Batteriezellen angepasst, dass ein maximaler Wärmeabfluss von diesen Batteriezellen auf das Wärmeübertragungselement 73 und somit auf das Wärmeleitelement 70 erfolgt.

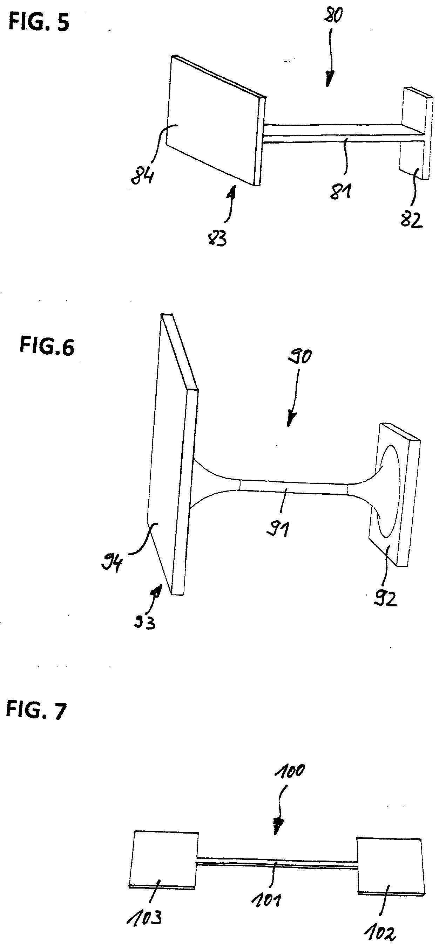

Gemäß Figur 5 ist ein nächstes Ausführungsbeispiel eines Wärmeleitelementes 80 gezeigt, dass im vorliegenden Fall spanabhebend aus gut wärmeleitendem Material, wie Aluminium, Kupfer oder Messing oder dergleichen, hergestellt ist. Das Wärmeleitelement 80 besitzt eine quaderförmiges Zwischenteil 81, dessen großflächigen Seitenflächen in Form eines liegenden Rechtecks ausgeführt sind. Das Zwischenteil 81 ist an seinen freien Enden je mit einem Wärmeübertragungselement 82 bzw. 83 versehen, von denen das einstoffig mit dem Zwischenteil 81 verbundene Wärmeübertragungselement 82 in Form eines stehenden Quaders ausgebildet ist, der mit einer seiner großflächigen rechteckförmigen Seitenflächen unter Bildung eines Zwischenwinkels von 90° zu den großflächigen Seitenflächen des Zwischenteils 81 an das Wärmeübertragungselement 82 angekoppelt ist. Dabei ist das Wärmeübertragungselement 82 und das Zwischenteil 81 derart zueinander ausgerichtet, dass die Breite des Wärmeübertragungselementes 82 auf die Tiefe des Zwischenteiles 81 abgestimmt ist und dass flächengleiche Abschnitte der dem Zwischenteil 81 zugewandten Seitenfläche des Wärmeübertragungselementes 82 seitlich gegenüber den Seitenflächen des Zwischenteiles 81 vorspringen. Die vom Zwischenteil 81 abgewandte Seitenfläche des Wärmeübertragungselementes 82 dient als Wärmekontaktfläche für die Wärmeabgabeschnittsstelle.

Das Wärmeübertragungselement 83 ist wie das Wärmeübertragungselement 82 ebenfalls in Art eines Quaders ausgebildet, dessen großflächigen Seitenflächen in Form von liegenden Rechtecken ausgeführt sind, wodurch die Ausrichtung des Wärmeübertragungselement 83 bezüglich des Zwischenteils 81 und der des Wärmeübertragungselementes 82 um 90° versetzt ist, d.h. die großflächigen rechteckförmigen Seitenflächen des Wärmeübertragungselementes 83 und die des Wärmeübertragungselementes 82 sehen senkrecht aufeinander.

Das Wärmeübertragungselement 83 ist mit einer seiner großflächigen, rechteckigen Seitenflächen mit den großflächigen Seitenflächen des Zwischenteils 81 unter Bildung eines Zwischenwinkels von 90° verbunden. Die Anbindung des Zwischenteiles 81 an das Wärmeübertragungselement 83 ist derart, dass das Zwischenelement 81 zumindest annähernd mittig zur Höhe der liegenden rechteckigen Seitenflächen des Wärmeübertragungselementes 83 und außermittig zur Breite dieser Rechteckflächen angeordnet ist. Durch diese Anordnung springen auf der dem Zwischenteil 81 zugewandten Seite des Wärmeübertragungselementes 83 gegenüber den großflächigen Seitenflächen des Zwischenteils 81 gleichflächige Randabschnitte vor, während die gegenüber der Grund- bzw. Deckfläche des Zwischenteils 81 vorspringenden Flächenabschnitte des Wärmeübertragungselementes 83 ungleich lang ausgebildet sind. An den längeren der Flächenabschnitte des Wärmeübertragungselementes 83 schließt sich nahtlos eine Aufnahmebereich 84 an,der zur Wärmeableitung für prismatisch ausgebildete Batteriezellen oder sog. Pouch-Batteriezellen dient. Der Aufnahmebereich 84 ist hinsichtlich seiner Fläche so an die wärmeabgebende Oberfläche der prismatisch ausgebildeten Batteriezellen oder der Pouch-Batteriezellen angepasst, dass ein maximaler Wärmeabfluss von diesen Batteriezellen auf das Wärmeübertragungselement 83 und somit auf das Wärmeleitelement 80 erfolgt. In Abweichung von dem beschriebenen Ausführungsbeispiel ist es auch denkbar, dass die großflächigen rechteckigen Seitenflächen der Wärmeübertragungselemente 82 und 83 bezüglich des Zwischenteiles 81 gleiche Ausrichtung besitzen

Figur 6 zeigt eine nächste Ausführungsform eines hier einstoffig aus Aluminiumdruckguss erzeugten Wärmeleitelementes 90, dass ein zumindest über den wesentlichen Teil seiner Länge stangenähnlich ausgebildetes Zwischenteil 91 mit kreisrunden Querschnitt aufweist, das sich an seinen freien Enden trichterartig erweitert. Diese trichterartigen Erweiterungen dienen zur Verbindung des Zwischenteiles 91 mit den Wärmeübertragungselementen 92 bzw. 93, wobei mit den trichterartigen Erweiterungen eine verbesserte Wärmeableitung von den Wärmübertragungselementen 92 und 93 auf das Zwischenteil 91 erreicht ist. Beide Wärmeübertragungselemente 92 und 93 sind als Quader ausgebildet, deren großflächigen Seitenflächen in Form von stehenden Rechtecken ausgeführt sind. Eine dieser Seitenflächen ist mit den trichterartigen Erweiterungen verbunden ist. Die andere Seitenfläche am Wärmeübertragungselement 92 dient als Wärmekontaktfläche für die Wärmeabgabeschnittstelle. Die dem Wärmeübertragungselement 92 zugewandte trichterartige Erweiterung liegt mit dem Zentrum ihrer Querschnittsfläche zumindest im Wesentlichen im Zentrum des Flächenschwerpunktes des dieser Erweiterung zugewandten Seitenfläche des Wärmeübertragungselementes 92.

Von den Wärmeübertragungselementen 92 und 93 weisen die großflächigen Seitenflächen des Wärmeübertragungselementes 93 bei gleicher Breite wie die großflächigen Seitenflächen des Wärmeübertragungselementes 92, eine größere Seitenlänge auf, wodurch die Seitenflächen des Wärmeübertragungselementes 93 eine größere Flächenausdehnung als die des Wärmeübertragungselementes 92 besitzen,. Dieses erzeugt in Kombination mit dem Zwischenteil 91 und dem Wärmeübertragungselement 93 im Längsschnitt zumindest annähernd eine H-Form für das Wärmeleitelement 90.

Der Flächenschwerpunkt dieser größeren großflächigen Seitenflächen des Wärmeübertragungselementes 93 ist in vertikaler Richtung versetzt zum Zentrum der Querschnittsfläche der trichterartigen Erweiterung angeordnet. Durch diesen vertikalen Versatz einerseits und größere Flächenausdehnung der großflächigen Seitenflächen andererseits ist an dem durch den Versatz gebildeten längeren Flächenabschnitt des Wärmeübertragungselementes 93 ein Aufnahmebereich 94 erzeugt, der zur Wärmeableitung für prismatisch ausgebildete Batteriezellen oder sog. Pouch-Batteriezellen dient. Der Aufnahmebereich 94 ist hinsichtlich seiner Fläche so an die wärmeabgebende Oberfläche der prismatisch ausgebildeten Batteriezellen oder der Pouch-Batteriezellen angepasst, dass ein maximaler Wärmeabfluss von diesen Batteriezellen auf das Wärmeübertragungselement 93 und somit auf das Wärmeleitelement 90 erfolgt.

Figur 7 zeigt ein weiteres Ausführungsbeispiel eines einstoffig aus gut wärmeleitendem Blechmaterial, wie einem Aluminiumblech, einem Kupferblech oder einem Messingblech oder dgl., ausgeschnittenes Wärmeleitelement 100, das eine zumindest stangenähnlich ausgebildetes Zwischenteil 101 aufweist, an dessen freien Enden je ein Wärmeübertragungselement 102 und 103 angeordnet ist, die beide flächenbündig an das Zwischenteil anschließen. Beide Wärmeübertragungselemente 102 und 103 sind in Form eines Quaders ausgebildet, dessen großflächigen Seitenflächen als deckungsgleiche Quadrate ausgeführt sind, deren Seitenlänge mittig zur Breite des Zwischenteils 101 ausgerichtet ist, wodurch in Vorderansicht und im Längsschnitt eine H-Form für das Wärmeleitelement 100 erzeugt ist. Während die vom Zwischenteil 101 abgewandte Außenfläche des Wärmeübertragungselements 102 als Kontaktfläche zur wärmeleitenden Anbindung an die Wärmeabgabeschnittstelle des Temperatur-Regelkreises dient, ist die vom Zwischenteil 101 abgewandte Außenfläche des Wärmeübertragungselementes 103 wärmeleitend an einem außerhalb des Wärmeleitelements 100 vorgesehenen Aufnahmebereich für eine Batteriezelle angekoppelt.

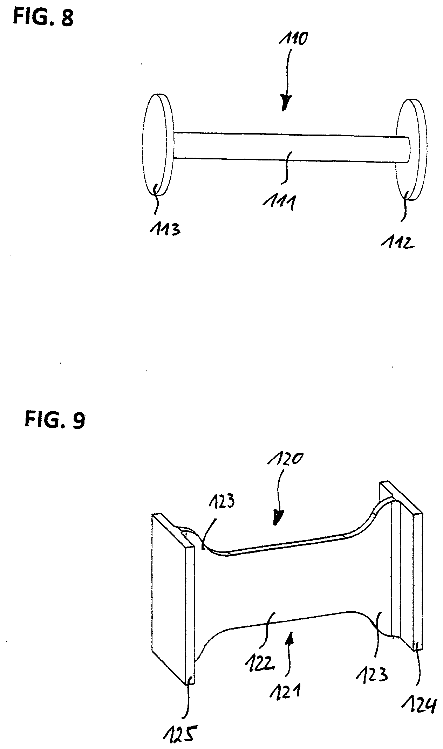

Figur 8 zeigt eine weitere Ausführungsform eines Wärmeleitelementes 110, das im vorliegenden Fall aus Aluminiumdruckguss erzeugt. Das Wärmeleitelement 110 besitzt ein zumindest stangenähnlich ausgebildetes Zwischenteil 111, das im vorliegenden Fall einen kreiszylinderischen Querschnitt aufweist und das an seinen freien Enden mit als Kreisscheiben ausgeführten, deckungsgleichen Wärmeübertragungselementen 112 und 113 versehen ist. Diese sind mit dem Zentrum einer ihrer kreisförmigen Seitenflächen im Zentrum der das kreiszylinderische Zwischenteil 111 endseitig begrenzenden Deckflächen angeordnet, wodurch sowohl in Seitenansicht und im Längsschnitt des Wärmeleitelementes 110 eine H-Form für dieses erzeugt ist. Die vom Zwischenteil 111 abgewandte Außenfläche des Wärmeübertragungselements 112 dient zur wärmeleitenden Anbindung an die Wärmeabgabeschnittstelle des Temperatur-Regelkreises. Die vom Zwischenteil 111 abgewandte Außenfläche des Wärmeübertragungselementes 113 ist wärmeleitend an einem außerhalb des Wärmeleitelements 110 vorgesehenen Aufnahmebereich für eine Batteriezelle angekoppelt.

Figur 9 zeigt ein letztes Ausführungsbeispiel eines Wärmeleitelementes 120, das im vorliegenden Fall als Schweißkonstruktion ausgeführt ist, deren aus wärmeleitendem Material, wie z. B. Aluminium oder dergleichen, gebildeten Einzelteile durch Verschweißen zu einem einstoffig ausgeführten Gesamtteil miteinander verbunden sind. Das Wärmeleitelement 120 weist ein Zwischenteil 121 auf, das einen als Quader ausgebildeten Mittelabschnitt 122 besitzt, dessen großflächigen Seitenflächen durch liegend angeordnete Rechtecke gebildet sind. An den Mittelabschnitt 122 schließen sich nahtlos je ein Endabschnitt 123 an, der zumindest annähernd in Art eines gleichschenklig ausgebildeten Trapezes ausgeführt ist, dessen kürzere der parallel zueinander verlaufenden Trapezseiten höhengleich mit dem Mittelabschnitt 122 verbunden ist. Die längere der parallel zueinander verlaufenden Trapezseiten der Endabschnitte 123 ist mit je einem Wärmeübertragungselement 124 und 125 verbunden, das als Quader ausgebildet ist, dessen großflächigen Seitenflächen als stehend angeordnete Rechtecke ausgeführt sind, deren Höhe auf die Länge der längeren Trapezseite abgestimmt ist, wodurch eine optimierte Wärmeüberleitung von den Wärmeübertragungselementen 124 und 125 auf das Zwischenteil 121 bewirkt ist. Dieses ist mittig zur Breite der als stehende Quader ausgebildeten, identischen Wärmeübertragungselemente 124 und 125 wärmeleitend angebunden, wodurch in Draufsicht auf das Wärmeleitelement 120 sich für dieses eine H-Form ergibt. Während die vom Zwischenteil 121 abgewandte Außenfläche des Wärmeübertragungselements 124 als Kontaktfläche zur wärmeleitenden Anbindung an die Wärmeabgabeschnittstelle des Temperatur-Regelkreises dient, ist die vom Zwischenteil 121 abgewandte Ausfläche des Wärmeübertragungselementes 125 wärmeleitend an einem außerhalb des Wärmeleitelementes 120 vorgesehenen Aufnahmebereich für eine Batteriezelle angekoppelt.

## Patentansprüche

1. Anordnung (1) zur Messung von emittierter Wärme bei Batteriezellen, wie Lithium-Ionen-Zellen, mit einer zumindest wärmedämmend ausgebildeten Prüfkammer (10) und mit einem innerhalb der Prüfkammer (10) angeordneten, zur Aufnahme mindestens einer Batteriezelle (21) dienenden Aufnahmebereich (16, 54, 64, 74, 84, 94) und mit wenigstens einem in der Prüfkammer (10) angeordneten Wärmeleitelement (12, 50, 60, 70, 80, 90, 100, 110, 120), das an seinen Enden mit wenigstens je einem Wärmeübertragungselement (14,15; 52, 53; 62,63; 72, 73; 82,83, 92,93; 102,103, 112,113, 124,125) versehen ist, von denen ein erstes Wärmeübertragungselement (15, 53, 63, 73, 83, 93, 103, 113, 125) mit dem Aufnahmebereich (16, 54, 64, 74, 84, 94) wärmeleitend gekoppelt ist und mit einem Temperaturregelkreis, wobei ein zweites Wärmeübertragungselement (14, 52, 62, 72, 82, 92, 102, 112, 124) des Wärmeleitelementes (12, 50, 60, 70, 80, 90, 100, 110, 120) mit einer Wärmeschnittstelle (28) des TemperaturRegelkreises thermisch gekoppelt ist, der an seiner Wärmeschnittstelle (28) eine Wärmesenke oder eine Wärmequelle bereitstellen kann, wobei das Wärmeleitelement (12, 50, 60, 70, 80, 90, 100, 110, 120) ein zwischen den Wärmeübertragungselementen (14,15; 52, 53; 62,63; 72, 73; 82,83, 92,93; 102,103, 112,113, 124,125) angeordnetes Zwischenteil (13, 51, 61, 71, 81, 91, 101, 111, 121) aufweist, an dem wenigstens zwei im Abstand zueinander angeordnete Temperatursensoren (23,24) vorgesehen sind, deren Abstand zueinander derart bemessen ist, dass anhand der Temperatursensoren (23,24) ein Temperaturgradient entlang des Zwischenteils bestimmbar ist.

2. Anordnung nach Anspruch 1, **dadurch gekennzeichnet, dass** die Wärmeschnittstelle (28) als Peltier-Element (27) ausgebildet ist, mit dem das zweite Wärmeübertragungselement (14, 52, 62, 72, 82, 92, 102, 112, 124) wärmeleitend verbunden ist.

3. Anordnung nach Anspruch 1, **dadurch gekennzeichnet, dass** die Wärmeschnittstelle (28) als Wärmetauscher eines umkehrbaren Kältekreislaufes ausgebildet ist, mit dem das zweite Wärmeübertragungselement (14, 52, 62, 72, 82, 92, 102, 112, 124) wärmeleitend verbunden ist.

4. Anordnung nach Anspruch 1, **dadurch gekennzeichnet, dass** die Wärmeschnittstelle (28) als Verdampferabschnitt einer Heatpipe in Kombination mit einer elektrischen Widerstandsheizung ausgebildet ist, mit denen das zweite Wärmeübertragungselement (14, 52, 62, 72, 82, 92, 102, 112, 124) wärmeleitend verbunden ist.

5. Anordnung nach einem der Ansprüche 1 bis 4 **dadurch gekennzeichnet, dass** das Zwischenteil (13, 51, 61, 71, 81, 91, 101, 111. 121) ein Querschnittsfläche-Längenverhältnis aufweist, das gleich oder kleiner dem Verhältnis ist, das sich aus dem dreifachen Wert der Kapazität der zu prüfenden Batteriezelle und der thermischen Leitfähigkeit des Zwischenteiles (13, 51, 61, 71, 81, 91, 101, 111, 121) entsprechend der Gleichung $\frac{A}{l} \leq \frac{k*C}{\lambda}$ ergibt, wobei die Querschnittsfläche A in m$^2$, die Länge I in m, die Kapazität C in Ah, die thermische Leitfähigkeit $\lambda$ in $\frac{W}{mK}$ und die Konstante k mit Wert 3 in $\frac{W}{AhK}$ einzusetzen ist.

6. Anordnung nach einem der Ansprüche 1 bis 5, **dadurch gekennzeichnet, dass** der Abstand der beiden Temperatursensoren (23,24) wenigstens der halben Länge des sich zwischen den Wärmeübertragungselementen (14,15; 52, 53; 62,63; 72, 73; 82,83, 92,93; 102,103, 112,113, 124,125) erstreckenden Zwischenteiles (13, 51, 61, 71, 81, 91, 101, 111, 121) entspricht.

**7.** Anordnung nach einem der Ansprüche 1 bis 6, **dadurch gekennzeichnet, dass** der Abstand der beiden Temperatursensoren (23, 24) derart gewählt ist, dass diese im Nahbereich der Wärmeübertragungselemente (14,15; 52, 53; 62,63; 72, 73; 82,83, 92,93; 102,103, 112,113, 124,125) angeordnet sind.

**8.** Anordnung nach einem der Ansprüche 1 bis 7, **dadurch gekennzeichnet, dass** das Zwischenteil (13, 51, 61, 71, 81, 91, 101, 111, 121) des Wärmeleitelementes (12, 50, 60, 70, 80, 90, 100, 110, 120) als Stange, insbes. mit einem Kreisquerschnitt, oder als quaderförmiges Flachprofil ausgebildet ist.

**9.** Anordnung nach einem der Ansprüche 1 bis 8 **dadurch gekennzeichnet, dass** das Zwischenteil (13, 51, 61, 71, 81, 91, 101, 111, 121) mit seinen Enden, insbes. seinen Stirnseiten, mit den Wärmeübertragungselementen (14,15; 52, 53; 62,63; 72, 73; 82,83, 92,93; 102,103, 112,113, 124,125) verbunden ist und dass das Zwischenteil (13, 51, 61, 71, 81, 91, 101, 111, 121) und die Wärmeübertragungselemente (14,15; 52, 53; 62,63; 72, 73; 82,83, 92,93; 102,103, 112,113, 124,125) einstückig, vorzugsweise jedoch einstoffig ausgebildet sind.

**10.** Anordnung nach einem der Ansprüche 1 bis 9, **dadurch gekennzeichnet, dass** das Wärmeleitelement (12, 50, 60, 70, 80, 90, 100, 110, 120) H-, M-, N-, W oder U-förmig oder zumindest annähernd als Rechteckrohr- oder Quadratrohr-ausgebildet ist.

**11.** Anordnung nach einem der Ansprüche 1 bis 10, **dadurch gekennzeichnet, dass** das Wärmeleitelement (12, 50, 60, 70, 80, 90, 100, 110, 120) spanabhebend oder spanlos gefertigt ist.

**12.** Anordnung nach Anspruch 11, **dadurch gekennzeichnet, dass** das Wärmeleitelement (12, 50, 60, 70, 80, 90, 100, 110, 120) als Strangpressprofil oder als Blechteil, insbesondere als Blechbiegeteil, ausgebildet ist.

**13.** Anordnung nach einem der Ansprüche 1 bis 12 **dadurch gekennzeichnet, dass** die Wärmeübertragungselemente (102, 103, 112, 113, 124, 125) zu ihrer wärmeleitenden Anbindung an den Aufnahmebereich (16, 54, 64, 74, 84, 94) bzw. an die Wärmeschnittstelle (28) mit einer Wärmekontaktfläche versehen sind, die über eine wärmeleitende Zwischenlage, insbesondere eine Wärmeleitpaste, mit dem Aufnahmebereich (16, 54, 64, 74, 84, 94) bzw. der Wärmeschnittstelle (28) wärmeleitend verbunden sind.

**14.** Anordnung nach einem der Ansprüche 1 bis 12, **dadurch gekennzeichnet, dass** der Aufnahmebereich (16, 54, 64, 74, 84, 94) in das erste Wärmeübertragungselement (15, 53, 63, 73, 83, 93) integriert ist, insbes. einstoffig mit diesem Wärmeübertragungselement (15, 53, 63, 73, 83, 93) zu einer Einheit verbunden ist.

**15.** Anordnung nach einem der Ansprüche 1 bis 14, **dadurch gekennzeichnet, dass** der Aufnahmebereich (16, 54, 64, 74, 84, 94) für die Batterie (21), zumindest weitgehend an deren Außengeometrie angepasst ist und über eine wärmeleitend ausgebildete Zwischenlage (20), insbesondere als sog. Gap-Filler dienende elastische Wärmeleitfolie, wärmeleitend mit der Batterie (21) verbunden ist.

**16.** Anordnung nach einem der Ansprüche 1 bis 15, **dadurch gekennzeichnet, dass** die Batterie (21) innerhalb des Aufnahmebereichs (16) mit wenigstens einem Temperatursensor (17) in wärmeleitenden Kontakt steht.

**17.** Anordnung nach einem der Ansprüche 1 bis 16, **dadurch gekennzeichnet, dass** die Prüfkammer (10) und das Wärmeleitelement (12) zur Umgebung hin von einer zumindest wärmedämmenden, vorzugsweise jedoch wärmeisolierenden Abschirmung umgeben sind, die bis an das zweite Wärmeübertragungselement (14) herangeführt ist.

**18.** Anordnung nach Anspruch 17, **dadurch gekennzeichnet, dass** innerhalb der Prüfkammer (10) ein Temperatursensor (30) angeordnet ist.

**19.** Anordnung nach einem der Ansprüche 1 bis 18, **dadurch gekennzeichnet, dass** eine Auswerteeinheit (32) vorgesehen ist, die ausgebildet ist, die Sensorsignale der Temperatursensoren (17, 23, 24, 25, 30) zu erfassen und zu bewerten und basierend darauf bei Bedarf den Temperatur-Regelkreis (31) zu aktivieren und die ausgebildet ist, insbes. basierend auf den Signalen der dem Wärmeleitelement (12) zugeordneten Temperatursensoren (23,24) den Wärmestrom entlang des Wärmeleitelementes (12) zu ermitteln.

**20.** Anordnung nach Anspruch 19, **dadurch gekennzeichnet, dass** die Auswerteeinheit (32) zur Bestimmung des Wärmestromes mit wenigstens einem Multiplexer (36) in Signalverbindung steht, der bei mehreren parallel betriebenen Wärmeleitelementen (12) die diesen zugeordneten Temperatursensoren (23,24) zur Erfassung des Temperaturgradienten am Wärmeleitelement (12) in vorgebbaren Zeitintervallen, insbes. in Zeitintervallen von 0,001s bis 10s, ansteuert.

## Claims

1. Arrangement (1) for measuring emitted heat in battery cells, such as lithium-ion cells, comprising an at least heat-attenuating test chamber (10) and comprising a receiving region (16, 54, 64, 74, 84, 94) arranged within the test chamber (10) and serving to receive at least one battery cell (21), and comprising at least one heat-conducting element (12, 50, 60, 70, 80, 90, 100, 110, 120), which is arranged in the test chamber (10) and which, at each of its ends, is provided with at least one heat transfer element (14, 15; 52, 53; 62, 63; 72, 73; 82, 83, 92, 93; 102, 103, 112, 113, 124, 125), of which a first heat transfer element (15, 53, 63, 73, 83, 93, 103, 113, 125) is heat-conductively coupled to the receiving region (16, 54, 64, 74, 84, 94), and with a temperature control circuit, wherein a second heat transfer element (14, 52, 62, 72, 82, 92, 102, 112, 124) of the heat-conducting element (12, 50, 60, 70, 80, 90, 100, 110, 120) is thermally coupled to a heat interface (28) of the temperature control circuit, which can produce a heat sink or a heat source at its heat interface (28), wherein the heat-conducting element (12, 50, 60, 70, 80, 90, 100, 110, 120) has an intermediate part (13, 51, 61, 71, 81, 91, 101, 111, 121), which is arranged between the heat transfer elements (14, 15; 52, 53; 62, 63; 72, 73; 82, 83, 92, 93; 102, 103, 112, 113, 124, 125) and on which there are provided at least two temperature sensors (23, 24) arranged at a distance from one another, the distance of which from one another is dimensioned such that a temperature gradient along the intermediate part is determinable on the basis of the temperature sensors (23, 24).

2. Arrangement according to claim 1, **characterised in that** the heat interface (28) is configured as a Peltier element (27), to which the second heat transfer element (14, 52, 62, 72, 82, 92, 102, 112, 124) is heat-conductively connected.

3. Arrangement according to claim 1, **characterised in that** the heat interface (28) is configured as a heat exchanger of a reversible refrigeration circuit, to which the second heat transfer element (14, 52, 62, 72, 82, 92, 102, 112, 124) is heat-conductively connected.

4. Arrangement according to claim 1, **characterised in that** the heat interface (28) is configured as an evaporator portion of a heatpipe in combination with an electric resistance heater, to which the second heat transfer element (14, 52, 62, 72, 82, 92, 102, 112, 124) is heat-conductively connected.

5. Arrangement according to any one of claims 1 to 4, **characterised in that** the intermediate part (13, 51, 61, 71, 81, 91, 101, 111, 121) has a cross-sectional area:length ratio that is equal to or less than the ratio resulting from triple the value of the capacity of the battery cell to be tested and the thermal conductivity of the intermediate part (13, 51, 61, 71, 81, 91, 101, 111, 121) in accordance with the equation $\frac{A}{l} \le \frac{k*C}{\lambda}$, wherein the cross-sectional area A is to be applied in m², the length l in m, the capacity C in Ah, the thermal conductivity λ in $\frac{W}{mK}$ and the constant k with value 3 in $\frac{W}{AhK}$.

6. Arrangement according to any one of claims 1 to 5, **characterised in that** the distance between the two temperature sensors (23, 24) corresponds to at least half the length of the intermediate part (13, 51, 61, 71, 81, 91, 101, 111, 121) extending between the heat transfer elements (14, 15; 52, 53; 62, 63; 72, 73; 82, 83, 92, 93; 102, 103, 112, 113, 124, 125).

7. Arrangement according to any one of claims 1 to 6, **characterised in that** the distance between the two temperature sensors (23, 24) is selected in such a way that these are arranged in the vicinity of the heat transfer elements (14, 15; 52, 53; 62, 63; 72, 73; 82, 83, 92, 93; 102, 103, 112, 113, 124, 125).

8. Arrangement according to any one of claims 1 to 7, **characterised in that** the intermediate part (13, 51, 61, 71, 81, 91, 101, 111, 121) of the heat-conducting element (12, 50, 60, 70, 80, 90, 100, 110, 120) is configured as a rod, in particular with a circular cross-section, or as a square flat profile.

9. Arrangement according to any one of claims 1 to 8, **characterised in that** the intermediate part (13, 51, 61, 71, 81, 91, 101, 111, 121) is connected by its ends, in particular its end faces, to the heat transfer elements (14, 15; 52, 53; 62, 63; 72, 73; 82, 83, 92, 93; 102, 103, 112, 113, 124, 125), and **in that** the intermediate part (13, 51, 61, 71, 81, 91, 101, 111, 121) and the heat transfer elements (14, 15; 52, 53; 62, 63; 72, 73; 82, 83, 92, 93; 102, 103, 112, 113, 124, 125) are formed in one piece, but preferably in a single material.

10. Arrangement according to any one of claims 1 to 9, **characterised in that** the heat-conducting element (12, 50, 60, 70, 80, 90, 100, 110, 120) is H-, M-, N-, W- or U-shaped or is configured at least approximately as a rectangular pipe or square pipe.

11. Arrangement according to any one of claims 1 to 10, **characterised in that** the heat-conducting element (12, 50, 60, 70, 80, 90, 100, 110, 120) is manufactured in a machining manner or in a non-machining manner.

12. Arrangement according to claim 11, **characterised in that** the heat-conducting element (12, 50, 60, 70, 80, 90, 100, 110, 120) is configured as an extruded profile or as a sheet metal part, in particular as a bent sheet metal part.

13. Arrangement according to any one of claims 1 to 12, **characterised in that** the heat transfer elements (102, 103, 112, 113, 124, 125), for their heat-conductive attachment to the receiving region (16, 54, 64, 74, 84, 94) or to the heat interface (28), are provided with a heat contact face, which heat contact faces are heat-conductively connected via a heat-conductive intermediate layer, in particular a heat-conductive paste, to the receiving region (16, 54, 64, 74, 84, 94) or the heat interface (28).

14. Arrangement according to any one of claims 1 to 12, **characterised in that** the receiving region (16, 54, 64, 74, 84, 94) is integrated into the first heat transfer element (15, 53, 63, 73, 83, 93), in particular is connected in a single material to said heat transfer element (15, 53, 63, 73, 83, 93) to form a unit.

15. Arrangement according to any one of claims 1 to 14, **characterised in that** the receiving region (16, 54, 64, 74, 84, 94) for the battery (21) is matched at least largely to the external geometry of the latter and is heat-conductively connected to the battery (21) via a heat-conductive intermediate layer (20), in particular an elastic heat-conductive film serving as a so-called gap-filler.

16. Arrangement according to any one of claims 1 to 15, **characterised in that** the battery (21) within the receiving region (16) is in heat-conductive contact with at least one temperature sensor (17).

17. Arrangement according to any one of claims 1 to 16, **characterised in that** the test chamber (10) and the heat-conducting element (12) towards the surrounding environment are surrounded by an at least heat-attenuating, but preferably heat-insulating shielding, which is guided as far as the second heat transfer element (14).

18. Arrangement according to claim 17, **characterised in that** a temperature sensor (30) is arranged within the test chamber (10).

19. Arrangement according to any one of claims 1 to 18, **characterised in that** an evaluation unit (32) is provided, which is configured to detect and to assess the sensor signals of the temperature sensors (17, 23, 24, 25, 30) and, on this basis, to activate the temperature control circuit (31) as necessary, and which is configured to determine the heat flow along the heat-conducting element (12), in particular on the basis of the signals of the temperature sensors (23, 24) associated with the heat-conducting element (12).

20. Arrangement according to claim 19, **characterised in that** the evaluation unit (32), for determination of the heat flow, is connected to at least one multiplexer (36) for signal exchange, which multiplexer, in the case of a plurality of heat-conducting elements (12) operated in parallel, actuates the temperature sensors (23, 24) associated with said heat-conducting elements to detect the temperature gradient at the heat-conducting element (12) at specifiable time intervals, in particular at time intervals from 0.001s to 10s.

**Revendications**

1. Agencement (1) pour la mesure de chaleur émise dans des cellules de batterie, telles que des cellules au lithium-ion, avec une chambre d'essai (10) réalisée au moins sous forme thermiquement résistante et avec une zone de réception (16, 54, 64, 74, 84, 94) agencée à l'intérieur de la chambre d'essai (10), servant à recevoir au moins une cellule de batterie (21), et avec au moins un élément thermoconducteur (12, 50, 60, 70, 80, 90, 100, 110, 120) agencé dans la chambre d'essai (10), qui est muni à ses extrémités d'au moins respectivement un élément de transfert de chaleur (14, 15 ; 52, 53 ; 62, 63 ; 72, 73 ; 82, 83, 92, 93 ; 102, 103, 112, 113, 124, 125), dont un premier élément de transfert de chaleur (15, 53, 63, 73, 83, 93, 103, 113, 125) est couplé de manière thermoconductrice à la zone de réception (16, 54, 64, 74, 84, 94), et avec un circuit de régulation de température, un deuxième élément de transfert de chaleur (14, 52, 62, 72, 82, 92, 102, 112, 124) de l'élément thermoconducteur (12, 50, 60, 70, 80, 90, 100, 110, 120) étant couplé thermiquement à une interface thermique (28) du circuit de régulation de température, qui peut fournir un puits de chaleur ou une source de chaleur au niveau de son interface thermique (28), l'élément thermoconducteur (12, 50, 60, 70, 80, 90, 100, 110, 120) présentant une pièce intermédiaire (13, 51, 61, 71, 81, 91, 101, 111, 121) agencée entre les éléments de transfert de chaleur (14, 15 ; 52, 53 ; 62, 63 ; 72, 73 ; 82, 83, 92, 93 ; 102, 103, 112, 113, 124, 125), sur laquelle sont prévus au moins deux capteurs de température (23, 24) agencés à distance l'un de l'autre, dont la distance mutuelle est dimensionnée de telle sorte qu'un gradient de température peut être déterminé le long de la pièce intermédiaire à l'aide des capteurs de température (23, 24).

**2.** Agencement selon la revendication 1, **caractérisé en ce que** l'interface thermique (28) est réalisée sous forme d'élément Peltier (27) avec lequel le deuxième élément de transfert de chaleur (14, 52, 62, 72, 82, 92, 102, 112, 124) est relié de manière thermoconductrice.

**3.** Agencement selon la revendication 1, **caractérisé en ce que** l'interface thermique (28) est réalisée sous forme d'échangeur de chaleur d'un circuit frigorifique réversible, avec lequel le deuxième élément de transfert de chaleur (14, 52, 62, 72, 82, 92, 102, 112, 124) est relié de manière thermoconductrice.

**4.** Agencement selon la revendication 1, **caractérisé en ce que** l'interface thermique (28) est réalisée sous forme de section d'évaporation d'un caloduc en combinaison avec un chauffage par résistance électrique, avec lesquels le deuxième élément de transfert de chaleur (14, 52, 62, 72, 82, 92, 102, 112, 124) est relié de manière thermoconductrice.

**5.** Agencement selon l'une quelconque des revendications 1 à 4, **caractérisé en ce que** la pièce intermédiaire (13, 51, 61, 71, 81, 91, 101, 111, 121) présente un rapport surface de section/longueur égal ou inférieur au rapport obtenu en multipliant par trois la valeur de la capacité de la cellule de batterie à tester et la conductivité thermique de la pièce intermédiaire (13, 51, 61, 71, 81, 91, 101, 111, 121) selon l'équation $\dfrac{A}{l} \leq \dfrac{k * C}{\lambda}$ , la surface de section A étant utilisée en m$^2$, la longueur l en m, la capacité C en Ah, la conductivité thermique $\lambda$ en $\dfrac{W}{mK}$ et la constante k avec la valeur 3 dans $\dfrac{W}{\Delta hK}$ .

**6.** Agencement selon l'une quelconque des revendications 1 à 5, **caractérisé en ce que** la distance entre les deux capteurs de température (23, 24) correspond au moins à la moitié de la longueur de la pièce intermédiaire (13, 51, 61, 71, 81, 91, 101, 111, 121) qui s'étend entre les éléments de transfert de chaleur (14, 15 ; 52, 53 ; 62, 63 ; 72, 73 ; 82, 83, 92, 93 ; 102, 103, 112, 113, 124, 125).

**7.** Agencement selon l'une quelconque des revendications 1 à 6, **caractérisé en ce que** la distance entre les deux capteurs de température (23, 24) est choisie de telle sorte que ceux-ci soient agencés à proximité des éléments de transfert de chaleur (14, 15 ; 52, 53 ; 62, 63 ; 72, 73 ; 82, 83, 92, 93 ; 102, 103, 112, 113, 124, 125).

**8.** Agencement selon l'une quelconque des revendications 1 à 7, **caractérisé en ce que** la pièce intermédiaire (13, 51, 61, 71, 81, 91, 101, 111, 121) de l'élément thermoconducteur (12, 50, 60, 70, 80, 90, 100, 110, 120) est réalisée sous forme de barre, notamment avec une section circulaire, ou sous forme de profilé plat parallélépipédique.

**9.** Agencement selon l'une quelconque des revendications 1 à 8, **caractérisé en ce que** la pièce intermédiaire (13, 51, 61, 71, 81, 91, 101, 111, 121) est reliée par ses extrémités, notamment ses côtés frontaux, aux éléments de transfert de chaleur (14, 15 ; 52, 53 ; 62, 63 ; 72, 73 ; 82, 83, 92, 93 ; 102, 103, 112, 113, 124, 125) et **en ce que** la pièce intermédiaire (13, 51, 61, 71, 81, 91, 101, 111, 121) et les éléments de transfert de chaleur (14, 15 ; 52, 53 ; 62, 63 ; 72, 73 ; 82, 83, 92, 93 ; 102, 103, 112, 113, 124, 125) sont réalisés d'une seule pièce, de préférence toutefois d'une seule matière.

**10.** Agencement selon l'une quelconque des revendications 1 à 9, **caractérisé en ce que** l'élément thermoconducteur (12, 50, 60, 70, 80, 90, 100, 110, 120) est réalisé en forme de H, M, N, W ou U ou au moins approximativement en forme de tube rectangulaire ou de tube carré.

**11.** Agencement selon l'une quelconque des revendications 1 à 10, **caractérisé en ce que** l'élément thermoconducteur (12, 50, 60, 70, 80, 90, 100, 110, 120) est fabriqué par enlèvement de copeaux ou sans enlèvement de copeaux.

**12.** Agencement selon la revendication 11, **caractérisé en ce que** l'élément thermoconducteur (12, 50, 60, 70, 80, 90, 100, 110, 120) est réalisé sous forme de profilé extrudé ou sous forme de pièce en tôle, notamment sous forme de pièce en tôle pliée.

**13.** Agencement selon l'une quelconque des revendications 1 à 12, **caractérisé en ce que** les éléments de transfert de chaleur (102, 103, 112, 113, 124, 125) sont pourvus, pour leur liaison thermoconductrice avec la zone de réception (16, 54, 64, 74, 84, 94) ou avec l'interface thermique (28), d'une surface de contact thermique qui est reliée de manière thermoconductrice à la zone de réception (16, 54, 64, 74, 84, 94) ou à l'interface thermique (28) par l'intermédiaire d'une couche intermédiaire thermoconductrice, notamment d'une pâte thermoconductrice.

**14.** Agencement selon l'une quelconque des revendications 1 à 12, **caractérisé en ce que** la zone de réception (16, 54, 64, 74, 84, 94) est intégrée au premier élément de transfert de chaleur (15, 53, 63, 73, 83, 93), notamment est reliée à cet élément de transfert de chaleur (15, 53, 63, 73, 83, 93) en une seule matière pour former une unité.

15. Agencement selon l'une quelconque des revendications 1 à 14, **caractérisé en ce que** la zone de réception (16, 54, 64, 74, 84, 94) pour la batterie (21) est adaptée au moins en grande partie à la géométrie extérieure de celle-ci et est reliée à la batterie (21) de manière thermoconductrice par l'intermédiaire d'une couche intermédiaire (20) réalisée sous forme thermoconductrice, notamment d'une feuille thermoconductrice élastique servant de « gap filler ».

16. Agencement selon l'une quelconque des revendications 1 à 15, **caractérisé en ce que** la batterie (21) est en contact thermoconducteur avec au moins un capteur de température (17) à l'intérieur de la zone de réception (16).

17. Agencement selon l'une quelconque des revendications 1 à 16, **caractérisé en ce que** la chambre d'essai (10) et l'élément thermoconducteur (12) sont entourés vers l'environnement par un blindage au moins thermiquement résistant, mais de préférence thermiquement isolant, qui s'étend jusqu'au deuxième élément de transfert de chaleur (14).

18. Agencement selon la revendication 17, **caractérisé en ce qu'**un capteur de température (30) est agencé à l'intérieur de la chambre d'essai (10).

19. Agencement selon l'une quelconque des revendications 1 à 18, **caractérisé en ce qu'**il est prévu une unité d'évaluation (32) qui est réalisée pour détecter et évaluer les signaux de capteur des capteurs de température (17, 23, 24, 25, 30) et, sur la base de ceux-ci, activer le circuit de régulation de température (31) en cas de besoin et qui est réalisée, notamment sur la base des signaux des capteurs de température (23, 24) associés à l'élément thermoconducteur (12), pour déterminer le flux de chaleur le long de l'élément thermoconducteur (12).

20. Agencement selon la revendication 19, **caractérisé en ce que** l'unité d'évaluation (32) pour la détermination du flux de chaleur est en liaison de signal avec au moins un multiplexeur (36) qui, dans le cas de plusieurs éléments thermoconducteurs (12) fonctionnant en parallèle, commande les capteurs de température (23, 24) associés à ceux-ci pour la détection du gradient de température sur l'élément thermoconducteur (12) à des intervalles de temps pouvant être prédéfinis, notamment à des intervalles de temps de 0,001 s à 10 s.

FIG. 1

**FIG.2**

**FIG.3**

**FIG.4**

FIG. 5

80

84

83

81

82

FIG.6

90

94

93

91

92

FIG. 7

100

103

101

102

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3813937 A
- CH 593484

- US 6572263 B1